# DEMANDE DE BREVET EUROPEEN

(11) **EP 2 848 505 A1**
(43) Date de publication de la demande: **18.03.2015**
(21) Numéro de dépôt: 14182784.0
(22) Date de dépôt: 29.08.2014
(51) Int. Cl.: B62D 65/10, B62D 65/18, B25H 1/00

(54) **Support de posage de palonnier moteur et ensemble de montage pour usine de fabrication de véhicules automobiles correspondant**

(30) Priorité: 16.09.2013 FR 1358907
(71) Demandeur: PEUGEOT CITROËN AUTOMOBILES SA, 78140 Velizy-Villacoublay (FR)
(72) Inventeur: Vogel, Alain, 68127 NIEDERENTZEN (FR)

(57) **Abrégé**

L'invention porte principalement sur un support (1) de posage de palonnier moteur (2), caractérisé en ce qu'il comporte un socle fixe (8), un ensemble de maintien (9) du palonnier moteur (2), et un système de guidage (11) permettant audit ensemble de maintien (9) du palonnier moteur (2) de se déplacer suivant un mouvement de translation linéaire sensiblement horizontale par rapport audit socle fixe (8). L'invention a également pour objet un ensemble de montage pour usine de fabrication de véhicules automobiles correspondant.

## Description

L'invention porte sur un support de posage de palonnier moteur ainsi que sur l'ensemble de montage pour usine de fabrication de véhicules automobiles correspondant.

Dans les usines de fabrication de véhicules automobiles, il est possible d'organiser la mise en place du moteur sur une chaîne de montage en faisant appel à une première structure à palan permettant à l'opérateur de rapprocher en bord de ligne un palonnier moteur, c'est-à-dire un palonnier supportant le moteur via un ensemble d'élingues à cet effet. On utilise également une deuxième structure à palan permettant à l'opérateur de manipuler le palonnier moteur déposé par la première structure pour positionner le moteur du véhicule sur la chaîne de montage.

Toutefois, pour des structures à palan se déplaçant suivant des directions perpendiculaires l'une par rapport à l'autre, il n'est pas possible d'effectuer la pose et la prise du palonnier moteur dans une même zone. En effet, dans un tel cas de figure, il existerait un risque trop élevé d'interférence, et donc de choc, entre les deux palans au niveau de cette zone commune de pose et de prise de pièce.

Dans ces conditions, on définit donc en bord de ligne une zone de pose du palonnier moteur pour la première structure à palan et une zone de prise du palonnier moteur pour la deuxième structure à palan qui sont distinctes l'une par rapport à l'autre.

Dans la pratique, pour assurer le déplacement du palonnier moteur de la zone de pose à la zone de prise, on utilise un charriot de manutention sur lequel sont chargés plusieurs palonniers. L'opérateur déplace ensuite le charriot de manière à positionner les palonniers moteur dans la zone de prise de la deuxième structure à palan.

Toutefois, une telle technique implique notamment une perte de temps dans la chaîne d'assemblage en raison d'une durée inhérente à chaque cycle de charge, transport, et décharge des palonniers moteur, ainsi que des coûts substantiels liés à la location des chariots de manutention.

L'invention vise à remédier efficacement à ces inconvénients en proposant un support de posage de palonnier moteur, caractérisé en ce qu'il comporte un socle fixe, un ensemble de maintien du palonnier moteur, et un système de guidage permettant audit ensemble de maintien du palonnier moteur de se déplacer suivant un mouvement de translation linéaire sensiblement horizontale par rapport audit socle fixe.

L'invention permet ainsi d'améliorer l'ergonomie du procédé de montage dans la mesure où l'opérateur n'aura qu'à déplacer en translation l'ensemble de maintien par rapport au socle fixe pour faire passer le palonnier moteur de la zone de pose du premier système à palan vers la zone de prise du deuxième système à palan. L'invention permet en outre de réaliser des économies substantielles de coût en évitant d'avoir à faire appel aux charriots de manutention. L'invention s'adapte également aisément à la diversité des références de moteurs et présente l'avantage d'être très simple à réaliser.

Selon une réalisation, l'ensemble de maintien du palonnier moteur comporte deux bras montés sur une embase, lesdits bras étant aptes à supporter chacun une extrémité dudit palonnier moteur. Une telle configuration permet ainsi de positionner le palonnier moteur à une hauteur adaptée à une manipulation par l'opérateur.

Selon une réalisation, les bras en forme en L sont munis chacun d'une encoche du côté d'une extrémité libre destinée à coopérer avec une extrémité dudit palonnier moteur. Cela permet de faciliter la mise en place du palonnier moteur sur le support de posage.

Selon une réalisation, l'embase présente une partie intermédiaire ayant une section inférieure à celle de ses extrémités. Cela permet de faciliter à l'opérateur l'accès au palonnier moteur.

Selon une réalisation, le socle fixe comprend deux poutres parallèles l'une par rapport à l'autre. Une telle configuration de socle confère une bonne résistance mécanique au support de posage.

Selon une réalisation, le socle fixe comporte deux entretoises fixées auxdites poutres, lesdites entretoises s'étendant transversalement par rapport à une direction d'allongement desdites poutres. On rigidifie ainsi la structure mécanique de l'ensemble.

Selon une réalisation, le système de guidage comporte deux glissières fixées chacune sur un bord d'extrémité de l'embase, et deux coulisses s'étendant suivant une direction d'allongement desdites poutres, chaque glissière étant apte à coulisser le long d'une coulisse correspondante. Le système de guidage permettant la translation linéaire de l'ensemble de maintien par rapport au socle fixe est ainsi réalisé de manière simple.

Selon une réalisation, chaque bras présente une portion recouverte d'un élément de protection. On évite ainsi un endommagement du moteur lors d'une manipulation par l'opérateur.

L'invention a également pour objet un ensemble pour usine de montage d'un véhicule automobile, caractérisé en ce qu'il comporte une première et une deuxième structures à palan aptes à se déplacer suivant des directions perpendiculaires l'une par rapport à l'autre, ainsi qu'au moins un support de posage de palonnier moteur selon l'invention positionné de manière à pouvoir assurer un déplacement en translation du palonnier moteur entre une zone de pose de la première structure à palan vers une zone de prise de la deuxième structure à palan.

L'invention sera mieux comprise à la lecture de la description qui suit et à l'examen des figures qui l'accompagnent. Ces figures ne sont données qu'à titre illustratif mais nullement limitatif de l'invention.

Les figures 1a et 1b montrent des vues en perspective d'un support de posage d'un palonnier moteur selon la présente invention respectivement dans une position repliée et dans une position déployée;

Les figures 2a et 2b représentent des vues de dessus d'un support de posage d'un palonnier moteur selon la présente invention respectivement dans une position repliée et dans une position déployée;

Les figures 3a et 3b montrent des vues de face d'un support de posage d'un palonnier moteur selon la présente invention respectivement dans une position repliée et dans une position déployée;

La figure 4 est une vue de côté du support de posage d'un palonnier moteur selon la présente invention;

La figure 5 est une représentation schématique de l'implantation d'une pluralité de supports de posage de palonnier moteur selon la présente invention dans une usine de fabrication de véhicules automobiles vue de dessus.

Les éléments identiques, similaires, ou analogues conservent la même référence d'une figure à l'autre.

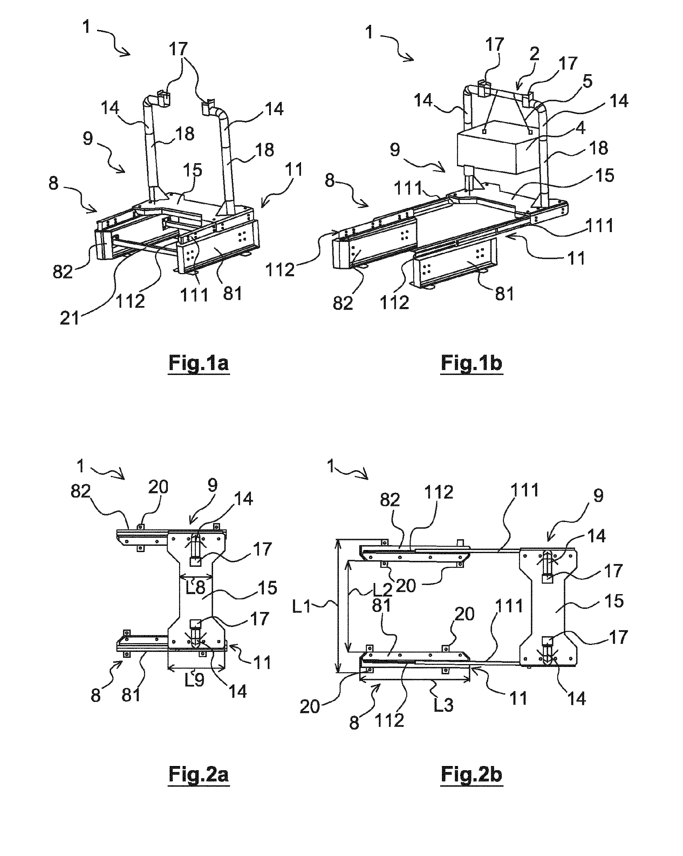

Les figures 1a, 1b, 2a, 2b, 3a, 3b, et 4 montrent un support 1 de posage de palonnier moteur de véhicule automobile selon la présente invention. Ce palonnier moteur 2 est destiné à supporter le bloc moteur 4 via un ensemble d'élingues 5 comme cela est représenté de manière très schématique sur la figure 1 b.

Ce support 1 comporte un socle fixe 8 et un ensemble 9 de maintien du palonnier moteur 2. L'ensemble 9 est monté mobile en translation linéaire par rapport au socle fixe 8 par l'intermédiaire d'un système de guidage 11. Le déplacement en translation de l'ensemble 9 s'effectue ici suivant une direction sensiblement horizontale. L'horizontalité de la translation ainsi que les autres termes relatifs du type "haut", "bas", "intérieur", "extérieur" employés dans la description ci-après sont définis pour un support de posage 1 installé dans sa position d'utilisation. En l'occurrence, la translation est donc effectuée suivant une direction située dans un plan sensiblement parallèle au sol de l'usine sur lequel est fixé le socle 8.

Plus précisément, l'ensemble 9 de maintien du palonnier moteur 2 comporte deux bras 14 montés sur une embase 15. Ces bras 14 sont aptes à supporter chacun une extrémité du palonnier moteur. Une telle configuration permet ainsi de positionner le palonnier moteur 2 à une hauteur adaptée à une manipulation par un opérateur. A cet effet, les bras 14 en forme en L comportent chacun une première partie s'étendant sensiblement perpendiculairement par rapport à l'embase 15 et une deuxième partie formant un retour de plus petite dimension qui s'étend sensiblement perpendiculairement par rapport à la première partie. Chaque deuxième partie du bras 14 est munie d'une encoche 17 du côté de l'extrémité libre du bras 14.

Les bras 14 sont disposés sur l'embase 15 en sorte que les encoches 17 sont tournées l'une vers l'autre de manière à pouvoir coopérer chacune avec une extrémité du palonnier moteur 2. Les encoches 17 sont délimitées par des parois sensiblement en forme de U. Ces parois délimitent un espace ouvert vers l'intérieur de l'embase 15 et vers le haut pour faciliter la mise en place et le retrait du palonnier moteur 2. En outre, l'espace de chaque encoche 17 est fermé vers le bas par le fond du U ainsi que du côté situé vers les extrémités de l'embase 15 de manière à garantir un maintien efficace du palonnier moteur 2 lorsque ce dernier est en position sur le support de posage 1.

Chaque bras 14 présente de préférence une portion recouverte d'un élément de protection 18, telle qu'une mousse de protection de forme tubulaire, de manière à éviter un endommagement du moteur lors de sa manipulation par l'opérateur. En l'occurrence, le moteur 4 étant positionné sous le palonnier 3, les mousses de protection 18 sont situées autour de la première partie de chaque bras 14 dans la zone où le moteur 4 est susceptible de subir des chocs lors de la manipulation du palonnier moteur 2.

Comme on peut le voir sur les figures 2a et 2b, l'embase 15 présente une partie intermédiaire ayant une section inférieure à celle de ses extrémités. Une telle forme permet de faciliter à l'opérateur l'accès au palonnier moteur 2 pour sa manipulation.

Le socle 8 comprend deux poutres 81, 82 parallèles l'une par rapport à l'autre. Comme cela est bien visible sur la figure 2b, ces poutres 81, 82 sont munies à chacune de leur extrémité de deux oreilles 20 saillantes traversées par un trou autorisant le passage de moyens de fixation, tels que des vis, pour la fixation du socle 8 au sol de l'usine. En outre, afin de rigidifier le maintien mécanique du support de posage 1, deux entretoises 21 montrées sur la figure 1 a sont fixées auxdites poutres 81, 82. Ces entretoises 21 s'étendent transversalement par rapport à une direction d'allongement des poutres 81, 82.

Par ailleurs, comme cela est bien visible notamment sur la figure 2b, le système de guidage 11 comporte deux glissières 111 fixées chacune sur un bord d'extrémité de l'embase 15, et deux coulisses 112 fixées chacune sur une poutre 81, 82. Chaque coulisse 112 s'étend suivant une direction d'allongement des poutres 81, 82. Chaque glissière 111, liée solidairement à l'ensemble 9 via l'embase 15, est apte à coulisser le long d'une coulisse 112 correspondante.

L'opérateur peut ainsi faire coulisser manuellement le support 1 entre une première position, dite position repliée, dans laquelle l'ensemble 9 de maintien et le socle 8 se superposent au moins en partie l'un par rapport à l'autre en vue de dessus (cf. figures 1a, 2a ou 3a) à une deuxième position, dite position déployée, dans laquelle l'ensemble de maintien 9 est éloigné du socle fixe 8 (cf. figures 1b, 2b, ou 3b).

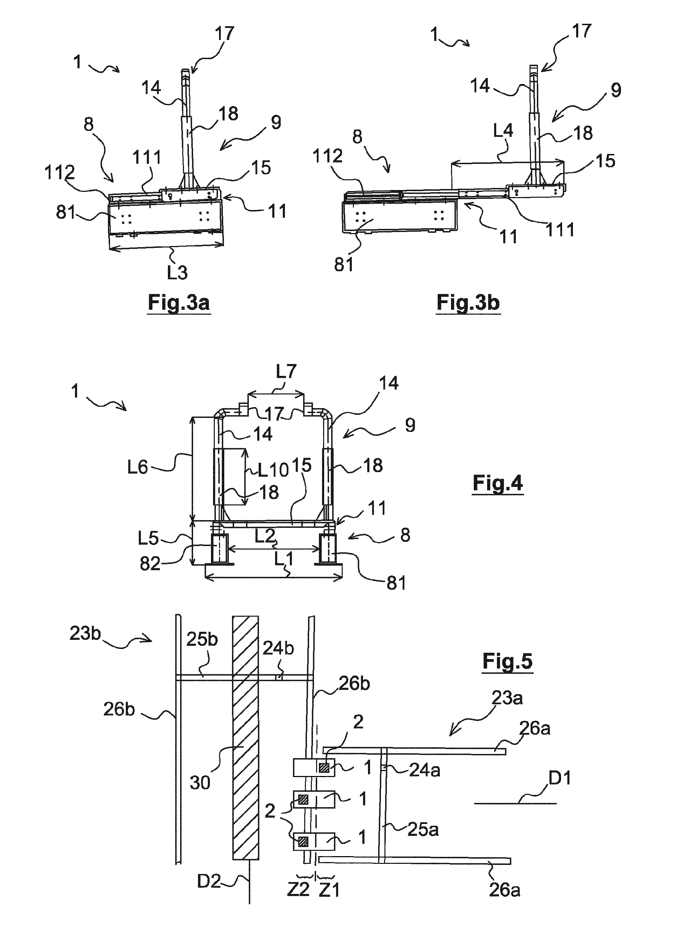

Dans un exemple de réalisation non limitatif, le support 1 présente un encombrement au sol L1 de l'ordre de 1200mm (cf. figure 2b). L'écart L2 entre les faces internes des deux poutres 81, 82 en regard l'une vers l'autre est de l'ordre de 840mm. En position repliée, le support 1 présente une dimension L3 de l'ordre de 1010mm, ce qui correspond à la longueur des poutres 81, 82 (cf. figure 3a). La course L4 de l'ensemble 9 de maintien entre la position repliée et la position déployée est de l'ordre de 1000mm (cf. figure 3b). Comme cela ressort de la figure 4, le socle 8 a une hauteur L5 de l'ordre de 400mm; tandis que la hauteur L6 des bras 14 est de l'ordre de 930mm. L'écart L7 entre les encoches 17 des bras 14 est de l'ordre de 500mm. L'embase 15 présente une section intermédiaire ayant une largeur L8 de l'ordre de 300mm et des extrémités ayant une largeur L9 de l'ordre de 540mm (cf. figure 2a). Les éléments de protection 18 s'étendent par exemple sur une longueur L10 de l'ordre de 500mm (cf. figure 4).

La figure 5 représente de manière schématique l'intégration d'une pluralité de supports 1 de posage de palonnier moteur 2 dans une usine de fabrication de véhicule automobile en vue de dessus.

On a ainsi représenté une première 23a et une deuxième 23b structures à palan se déplaçant suivant des directions D1 et D2 perpendiculaires l'une par rapport à l'autre. Chaque structure à palan comporte un palan 24a, 24b associé à un crochet afin de supporter le palonnier moteur 2. Chaque palan 24a, 24b est monté sur un support longitudinal 25a, 25b lequel est mobile en translation respectivement le long de rails 26a, 26b. Chaque palan 24a, 24b est mobile suivant une direction verticale par rapport au support 25a, 25b correspondant. Chaque palan 24a, 24b est de préférence également mobile en translation le long du support 25a, 25b correspondant.

Une pluralité de supports de posage 1 sont positionnés de manière à pouvoir assurer chacun un déplacement en translation d'un palonnier moteur 2 entre une zone de pose Z1 de la première structure à palan 23a et une zone de prise Z2 de la deuxième structure à palan 23b.

Plus précisément, lorsque le support 1 se trouve en position repliée, l'ensemble 9 de maintien se situe dans la zone de pose Z1 de la première structure à palan 23a. L'opérateur peut alors positionner le palonnier moteur 2 sur le support 1 via l'insertion des extrémités du palonnier moteur 2 à l'intérieur des encoches 17. Une fois le palonnier moteur 2 sur le support 1, l'opérateur peut le décrocher de la première structure à palan 23a. L'opérateur peut ensuite déplacer manuellement en translation l'ensemble de maintien 9 de manière à faire passer le support de posage de la position repliée vers la position déployée. A cet effet, l'opérateur pourra par exemple pousser sur un des bras 14 en direction de la position déployée.

Lorsque le support 1 de posage se trouve dans la position déployée, l'ensemble de maintien 9 se situe dans la zone de prise Z2 de la deuxième structure à palan 23b. L'opérateur peut alors accrocher le palonnier moteur 2 à la deuxième structure à palan 23b afin de déplacer le palonnier moteur 2 vers la chaîne de montage du moteur référencée 30.

Bien entendu, l'homme du métier pourra modifier le support 1 de posage de palonnier moteur 2 précédemment décrit sans sortir du cadre de l'invention définie par les revendications ci-après. Ainsi, il sera notamment possible d'automatiser le déplacement de l'ensemble de maintien 9 par rapport au socle 8 en intégrant un moteur ou un vérin commandé électriquement au système de guidage. En variante, le système de guidage 11 pourra être formé uniquement par une seule coulisse 112 et une seule glissière 111 correspondante. En outre, les dimensions du support de posage 1 pourront bien évidemment être modifiées pour s'adapter à l'application envisagée.

## Revendications

1. Support (1) de posage de palonnier moteur (2), **caractérisé en ce qu'**il comporte un socle fixe (8), un ensemble de maintien (9) du palonnier moteur (2), et un système de guidage (11) permettant audit ensemble de maintien (9) du palonnier moteur (2) de se déplacer suivant un mouvement de translation linéaire sensiblement horizontale par rapport audit socle fixe (8).

2. Support selon la revendication 1, **caractérisé en ce que** l'ensemble de maintien (9) du palonnier moteur (2) comporte deux bras (14) montés sur une embase (15), lesdits bras (14) étant aptes à supporter chacun une extrémité dudit palonnier moteur (2).

3. Support selon la revendication 2, **caractérisé en ce que** les bras (14) en forme en L sont munis chacun d'une encoche (17) du côté d'une extrémité libre destinée à coopérer avec une extrémité dudit palonnier moteur (2).

4. Support selon la revendication 2 ou 3, **caractérisé en ce que** l'embase (15) présente une partie intermédiaire ayant une section inférieure à celle de ses extrémités.

5. Support selon l'une quelconque des revendications 1 à 4, **caractérisé en ce que** le socle fixe (8) comprend deux poutres (81, 82) parallèles l'une par rapport à l'autre.

6. Support selon la revendication 5, **caractérisé en ce que** le socle fixe (8) comporte deux entretoises (21) fixées auxdites poutres (81, 82), lesdites entretoises (21) s'étendant transversalement par rapport à une direction d'allongement desdites poutres (81, 82).

7. Support selon les revendications 2 et 5, **caractérisé en ce que** le système de guidage (11) comporte deux glissières (111) fixées chacune sur un bord d'extrémité de l'embase (15), et deux coulisses (112) s'étendant suivant une direction d'allongement desdites poutres (81, 82), chaque glissière (111) étant apte à coulisser le long d'une coulisse (112) correspondante.

8. Support selon la revendication 2, 3 ou 4, **caractérisé en ce que** chaque bras (14) présente une portion recouverte d'un élément de protection (18).

9. Ensemble pour usine de montage d'un véhicule automobile, **caractérisé en ce qu'**il comporte une première (23a) et une deuxième (23b) structures à palan aptes à se déplacer suivant des directions (D1, D2) perpendiculaires l'une par rapport à l'autre, ainsi qu'au moins un support (1) de posage de palonnier moteur (2) selon l'une quelconque des revendications précédentes positionné de manière à pouvoir assurer un déplacement en translation du palonnier moteur (2) entre une zone de pose (Z1) de la première structure à palan (23a) vers une zone de prise (Z2) de la deuxième structure à palan (23b).
